# EUROPÄISCHE PATENTANMELDUNG

(11) **EP 3 650 289 A1**
(43) Veröffentlichungstag der Anmeldung: **13.05.2020**
(21) Anmeldenummer: 19205578.8
(22) Anmeldetag: 28.10.2019
(51) Int. Cl.: B60R 21/203

(54) **LENKUNGSBAUGRUPPE FÜR EINE FAHRZEUGLENKUNG**

(30) Priorität: 06.11.2018 DE 102018127636
(71) Anmelder: ZF Automotive Safety Germany GmbH, 63743 Aschaffenburg (DE)
(72) Erfinder: FUNK, André, 63743 Aschaffenburg (DE); FRIESS, Marc, 63849 Leidersbach (DE); HAAS, Markus, 64760 Oberzent (DE)
(74) Vertreter: ZF Patentabteilung - DIPS

(57) **Zusammenfassung**

Die Erfindung betrifft eine Lenkungsbaugruppe (10) für eine Fahrzeuglenkung, mit einem ersten Kopplungsbauteil, insbesondere einem Gassackmodul (16), das wenigstens einen starren Rasthaken (12) aufweist, und einem zweiten Kopplungsbauteil, insbesondere einer Montageplatte (18), das ein vormontiertes Federelement (14) aufweist, wobei die beiden Kopplungsbauteile entlang einer Montageachse (A) aufeinander zu bewegbar sind, bis ein Abschnitt des Federelements (14) den wenigstens einen Rasthaken (12) in einer Befestigungsposition hintergreift und die Kopplungsbauteile miteinander verbindet, wobei das Federelement (14) bewegbar ist zwischen einer Kopplungsstellung, in der das Federelement (14) weitgehend entspannt ist und den wenigstens einen Rasthaken (12) hintergreift, sowie einer Entkopplungsstellung, in der das Federelement (14) gespannt ist und quer zur Montageachse (A) vom Rasthaken (12) beabstandet ist, wobei das zweite Kopplungsbauteil ein Halteelement (22) zum Fixieren des Federelements (14) in der Entkopplungsstellung aufweist.

## Beschreibung

Die Erfindung betrifft eine Lenkungsbaugruppe für eine Fahrzeuglenkung, mit einem Gassackmodul und einer Montageplatte zur Befestigung des Gassackmoduls an einem Lenkrad.

Frontgassackmodule zur Rückhaltung von Fahrzeuginsassen sind fahrerseitig meist im Nabenbereich des Lenkrads angeordnet, sodass sich ein Gassack bei der Modulaktivierung nach einem Fahrzeugaufprall vor dem Fahrzeuginsassen entfaltet und diesen schützt.

Mit Blick auf das Montageverfahren wird üblicherweise zunächst das Lenkrad ohne Gassackmodul an der Lenksäule befestigt und anschließend das Gassackmodul mit der Lenkradnabe verbunden, insbesondere verrastet. Eine Verrastung ermöglicht in vorteilhafter Weise eine einfache, zuverlässige und äußerst schnelle Montage des Gassackmoduls, ohne dass Werkzeuge benötigt werden.

Um eine hinreichend zuverlässige und robuste Rastbefestigung des Gassackmoduls zu gewährleisten, müssen allerdings mit Bezug auf eine Lenksäulenachse beachtliche axiale Montagekräfte aufgebracht werden. Bei aufeinanderfolgenden Montagevorgängen an einer industriellen Montagelinie kann dies zu einer hohen körperlichen Beanspruchung und raschen Ermüdung des betreffenden Monteurs führen.

Aufgabe der Erfindung ist daher die Schaffung einer Lenkungsbaugruppe, bei der die zum Herstellen einer Rastverbindung zwischen Gassackmodul und Fahrzeuglenkrad notwendige Montagekraft besonders gering ist.

Erfindungsgemäß wird diese Aufgabe gelöst durch eine Lenkungsbaugruppe für eine Fahrzeuglenkung, mit einem ersten Kopplungsbauteil, insbesondere einem Gassackmodul, das wenigstens einen Rasthaken aufweist, und einem zweiten Kopplungsbauteil, insbesondere einer Montageplatte, das ein vormontiertes Federelement aufweist, wobei die Kopplungsbauteile entlang einer Montageachse aufeinander zu bewegbar sind, bis ein Abschnitt des Federelements den wenigstens einen Rasthaken in einer Befestigungsposition hintergreift und die Kopplungsbauteile miteinander verbindet, wobei das Federelement bewegbar ist zwischen einer Kopplungsstellung, in der das Federelement weitgehend entspannt ist sowie den wenigstens einen Rasthaken hintergreift, und einer Entkopplungsstellung, in der das Federelement gespannt ist sowie quer zur Montageachse vom Rasthaken beabstandet ist, und wobei das zweite Kopplungsbauteil ein Halteelement zum Fixieren des Federelements in der Entkopplungsstellung aufweist.

Bei herkömmlichen Lenkungsbaugruppen weist der Rasthaken üblicherweise eine Rastnase auf, wobei am Rücken der Rastnase eine Schrägfläche zum Spannen des Federelements vorgesehen ist. Beim Zuführen des Gassackmoduls in axialer Montagerichtung wird das Federelement am Rücken der Rastnase zunächst gespannt, bevor es in die Kopplungsstellung zurückschnappt und den Rasthaken hintergreift. Aus dem Spannen des Federelements bei der Befestigung des Gassackmoduls am Lenkrad resultieren unerwünscht hohe Montagekräfte. Durch das am zweiten Kopplungsbauteil vorgesehene Halteelement kann das Federelement bereits vorgespannt an die Montagelinie angeliefert werden und in axialer Montagerichtung ohne Kraftaufwand an der Rastnase des Rasthakens vorbeibewegt werden, sodass in vorteilhafter Weise keine axialen Montagekräfte zum Spannen des Federelements aufgebracht werden müssen.

Das Halteelement zum Fixieren des Federelements in der Entkopplungsstellung ist vorzugsweise ein an am zweiten Kopplungsbauteil angebrachter, insbesondere einstückig angeformter, axialer Vorsprung. Auf diese Weise lässt sich eine gewünschte Fixierung des Federelements mit minimalem Aufwand besonders einfach realisieren.

Das Halteelement kann insbesondere als Rampe ausgeführt sein, wobei eine Rampenschräge in der Kopplungsstellung des Federelements dem Federelement zugewandt und in der Entkopplungsstellung des Federelements vom Federelement abgewandt ist. Dadurch diese Rampe lässt sich das Federelement beim Vorspannen quer zur Montageachse gleichzeitig auch in axialer Richtung leicht vorspannen. Diese axiale Vorspannung reicht aus, um in Spannrichtung hinter dem Halteelement axial in die Entkopplungsstellung zu schnappen, in welcher das Federelement quer zur Montageachse vorgespannt ist.

In einer Ausführungsform der Lenkungsbaugruppe weist das erste Kopplungsbauteil ein vom Rasthaken beabstandetes Betätigungselement zum Lösen des Federelements aus seiner Entkopplungsstellung auf. Nachdem das Federelement bei der Montage die Rastnase des Rasthakens passiert hat, wird es durch das Betätigungselement axial beaufschlagt, bis es vom Halteelement nicht mehr in seiner Entkopplungsstellung gehalten werden kann und in seine Kopplungsstellung schnappt.

Vorzugsweise ist das Betätigungselement ein axialer Vorsprung, insbesondere ein axial verlaufender Stift, welcher in der Entkopplungsstellung des Federelements axial mit einem Abschnitt des Federelements fluchtet.

Das zweite Kopplungsbauteil weist bevorzugt eine axiale Durchgangsöffnung auf, durch die sich das Betätigungselement erstrecken kann. Auf diese Weise kann das am ersten Kopplungsbauteil angebrachte Betätigungselement problemlos das Federelement beaufschlagen, welches auf einer vom ersten Kopplungsbauteil abgewandten Seite des zweiten Kopplungsbauteils angeordnet ist.

Gemäß einer bevorzugten Ausführungsform ist das erste Kopplungsbauteil ein Gassackmodul und das zweite Kopplungsbauteil eine Montageplatte der Lenkungsbaugruppe. Alternativ ist selbstverständlich auch denkbar, dass die Montageplatte mit dem Rasthaken versehen ist und folglich das erste Kopplungsbauteil bildet, während das Gassackmodul ein vormontiertes Federelement aufweist und dementsprechend das zweite Kopplungsbauteil bildet.

Das Federelement ist vorzugsweise auf einer vom Gassackmodul abgewandten axialen Stirnseite der Montageplatte angeordnet.

Das Betätigungselement ist bevorzugt an einem der Montageplatte zugewandten Modulboden des Gassackmoduls vorgesehen, wobei der Modulboden insbesondere als Generatorträger für einen Gasgenerator des Gassackmoduls ausgebildet ist. Alternativ sind auch Ausführungsvarianten denkbar, bei denen das Betätigungselement an der Seitenwand einer Modulkappe des Gassackmoduls vorgesehen ist.

Gemäß einer weiteren Ausführungsform umfasst die Lenkungsbaugruppe auch ein Lenkradskelett, wobei die Montageplatte als separates Bauteil axial zwischen dem Gassackmodul und dem Lenkradskelett angeordnet ist. Die Montageplatte ist in dieser Ausführungsform vorzugsweise schwingfähig am Lenkradskelett befestigt, wodurch sich in der Fahrzeuglenkung eine vorteilhafte Schwingungstilgung, das heißt eine Minimierung unerwünschter Lenkradvibrationen realisieren lässt.

In alternativen Ausführungsvarianten kann die Montageplatte auch einstückig in das Lenkradskelett integriert sein.

Weitere Merkmale und Vorteile der Erfindung ergeben sich aus der nachfolgenden Beschreibung einer bevorzugten Ausführungsform unter Bezugnahme auf die Zeichnungen. In diesen zeigt:
- Figur 1 eine perspektivische Ansicht einer erfindungsgemäßen Lenkungsbaugruppe mit einem Gassackmodul und einer Montageplatte;
- Figur 2 eine axiale Draufsicht auf die Montageplatte der Lenkungsbaugruppe gemäß Figur 1;
- Figur 3 eine perspektivische Detailansicht der Lenkungsbaugruppe gemäß Figur 1 bei der Montage des Gassackmoduls an der Montageplatte;
- Figur 4 eine perspektivische Detailansicht gemäß Figur 3 kurz vor der Verrastung zwischen dem Gassackmodul und der Montageplatte;
- Figur 5 eine perspektivische Detailansicht gemäß Figur 3 nach der Verrastung zwischen dem Gassackmodul und der Montageplatte
- Figur 6 eine perspektivische Ansicht eines Gassackmoduls in seiner Vormontageposition vor der Verrastung mit einer Montageplatte;
- Figur 7 eine perspektivische Ansicht des Gassackmoduls gemäß Figur 6 in seiner Vormontageposition nach der Verrastung mit der Montageplatte;
- Figur 8 eine perspektivische Ansicht des Gassackmoduls gemäß Figur 6 in seiner Endmontageposition nach der Verrastung mit der Montageplatte; und
- Figur 9 eine perspektivische Explosionsansicht einer erfindungsgemäßen Lenkungsbaugruppe.

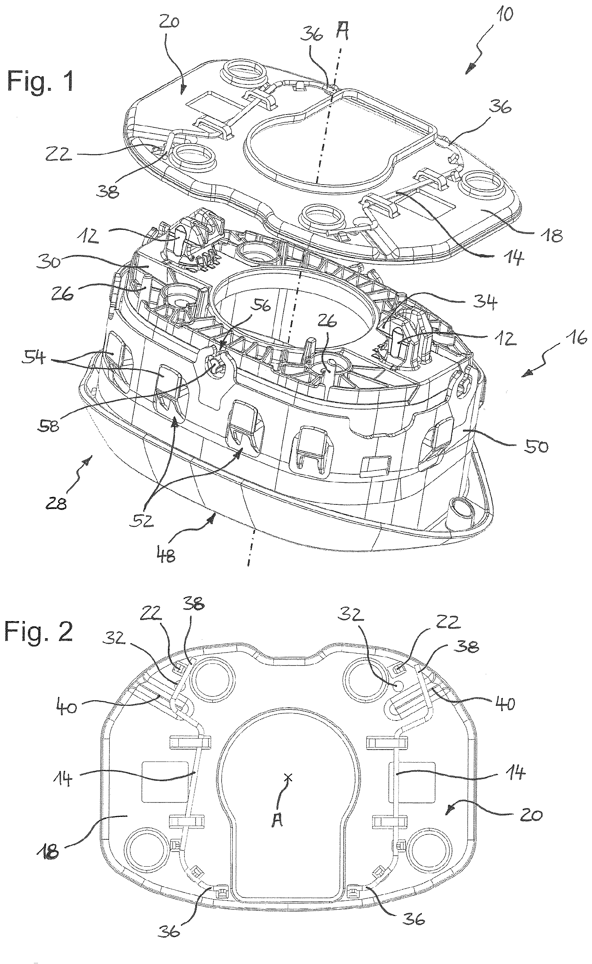

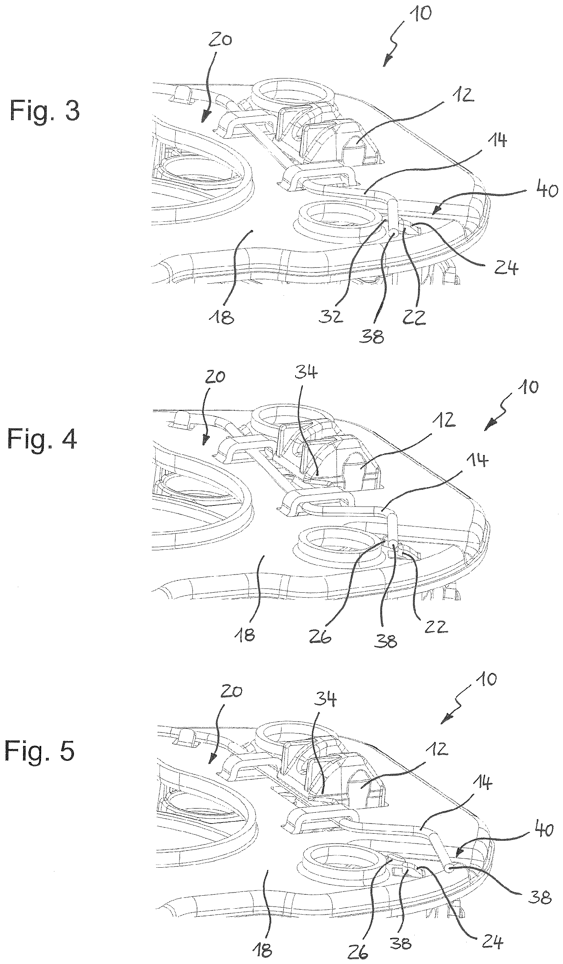

Die Figuren 1 bis 9 zeigen eine Lenkungsbaugruppe 10 für eine Fahrzeuglenkung, mit einem ersten Kopplungsbauteil, das einen starren Rasthaken 12 aufweist, und einem zweiten Kopplungsbauteil, das ein vormontiertes Federelement 14 aufweist, wobei die beiden Kopplungsbauteile entlang einer Montageachse A aufeinander zu bewegbar sind, bis ein Abschnitt des Federelements 14 den wenigstens einen Rasthaken 12 in einer Befestigungsposition hintergreift und die Kopplungsbauteile miteinander verbindet (siehe Figur 5).

Im vorliegenden Ausführungsbeispiel ist das erste Kopplungsbauteil ein Gassackmodul 16 und das zweite Kopplungsbauteil eine Montageplatte 18.

Für den Fachmann ist natürlich ohne Weiteres ersichtlich, dass alternativ auch die Montageplatte 18 den Rasthaken 12 und das Gassackmodul 16 das vormontierte Federelement 14 aufweisen könnte. In diesem Fall wäre folglich die Montageplatte 18 das erste Kopplungsbauteil und das Gassackmodul 16 das zweite Kopplungsbauteil. Das generelle, nachfolgend beschriebene Verbindungskonzept ist analog auch auf eine solche Ausführungsvariante problemlos übertragbar.

Anhand der Figuren 1 und 2 wird deutlich, dass im vorliegenden Ausführungsbeispiel zwei starre Rasthaken 12 sowie zwei separate Federelemente 14 vorgesehen sind, wobei jedem Rasthaken 12 ein Federelement 14 zugeordnet ist. Alternativ können die beiden Federelemente 14 auch einstückig ausgeführt sein, beispielsweise als U-förmige Feder, wobei jedem Rasthaken 12 dann jeweils ein beweglicher Federschenkel zugeordnet wäre. Generell sind auch Ausführungsvarianten denkbar, bei denen eine andere Anzahl von Rasthaken 12 vorgesehen ist.

Die Federelemente 14 sind gemäß Figur 1 auf einer vom Gassackmodul 16 abgewandten axialen Stirnseite 20 der Montageplatte 18 angeordnet.

Jedes Federelement 14 ist bewegbar zwischen einer Kopplungsstellung, in der das Federelement 14 weitgehend entspannt ist und den wenigstens einen Rasthaken 12 hintergreifen kann (vgl. Figur 2, rechtes Federelement 14), sowie einer Entkopplungsstellung, in der das Federelement 14 gespannt ist und quer zur Montageachse A vom Rasthaken 12 beabstandet ist (vgl. Figur 2, linkes Federelement 14).

Die Montageplatte 18 weist ein Halteelement 22 zum Fixieren des Federelements 14 in der Entkopplungsstellung auf, wobei das Halteelement 22 in der dargestellten Ausführungsform ein einstückig mit der Montageplatte 18 ausgebildeter Vorsprung ist, der axial von der Stirnseite 20 der Montageplatte 18 absteht.

Konkret ist dieser Vorsprung als Rampe ausgeführt, wobei eine Rampenschräge 24 in der Kopplungsstellung des Federelements 14 dem Federelement 14 zugewandt (Figur 5) und in der Entkopplungsstellung des Federelements 14 vom Federelement 14 abgewandt ist (Figur 3).

Um das Federelement 14 aus seiner gespannten Entkopplungsstellung zu lösen, weist das Gassackmodul 16 ein vom Rasthaken 12 beabstandetes Betätigungselement 26 auf.

Gemäß Figur 1 umfasst das Gassackmodul 16 unter anderem eine Modulkappe 28, die im eingebauten Zustand des Gassackmoduls 16 einem Insassen zugewandt ist, und einen Modulboden 30, der die Rasthaken 12 zur Befestigung des Gassackmoduls 16 an einem Fahrzeugbauteil, insbesondere an einem Fahrzeuglenkrad aufweist. Das Betätigungselement 26 ist in diesem Fall als stiftartiger Vorsprung ausgebildet, der sich von einer der Montageplatte 18 zugewandten Seite des Modulbodens 30 axial in Richtung zur Montageplatte 18 erstreckt und in der Entkopplungsstellung des Federelements 14 axial mit einem Abschnitt des Federelements 14 fluchtet.

Der Modulboden 30 ist hier als Spritzgussteil aus einem robusten Kunststoff gefertigt, wobei das Betätigungselement 26 insbesondere einstückig an den Modulboden 30 angeformt ist.

Die Montageplatte 18 weist gemäß Figur 2 eine axiale Durchgangsöffnung 32 auf, die mit dem Betätigungselement 26 axial fluchtet, wobei sich das Betätigungselement 26 zum Lösen des Federelements 14 aus seiner gespannten Entkopplungsstellung durch diese Durchgangsöffnung 32 erstreckt.

Im Folgenden wird anhand der Figuren 3 bis 5 kurz der Montagevorgang des Gassackmoduls 16 an der Montageplatte 18 erläutert.

Zu Beginn des Montagevorgangs befindet sich das an der Montageplatte 18 vormontierte Federelement 14 in seiner gespannten Entkopplungsstellung, in der das Federelement 14 quer zur Montageachse A vom Rasthaken 12 beabstandet ist. Gemäß Figur 3 kann sich der Rasthaken 12 folglich beim axialen Zuführen des Gassackmoduls 16 ungehindert seitlich am Federelement 14 vorbeibewegen, ohne das Federelement 14 axial oder radial zu beaufschlagen.

Wird gemäß Figur 4 eine axiale Relativposition erreicht, in der eine Rastnase 34 des Rasthakens 12 das Federelement 14 passiert hat, gelangt das stiftförmige Betätigungselement 26 in Kontakt mit dem Federelement 14 und beaufschlagt das Federelement 14 in axialer Richtung. Das Federelement 14 gleitet dadurch am Halteelement 22 entlang, bis es radial nach außen in seine Kopplungsstellung schnappt.

In der Kopplungsstellung gemäß Figur 5 hintergreift das Federelement 14 den Rasthaken 12, konkret die Rastnase 34 des Rasthakens 12, sodass das Gassackmodul und die Montageplatte miteinander gekoppelt und relativ zueinander in einer axialen Befestigungsposition fixiert sind. Verglichen mit der Entkopplungsstellung ist das Federelement 14 in der Kopplungsstellung entspannt, wobei jedoch auch in der Kopplungsstellung noch eine gewisse Restspannung vorgesehen sein kann.

Damit ist die Montage des Gassackmoduls 16 an der Montageplatte 18 abgeschlossen.

Anhand der Figur 2 ist gut zu erkennen, dass das Federelement 14 ein an der Montageplatte 18 fixiertes, festes Federende 36 und ein radial bewegbares, freies Federende 38 aufweist. Im Bereich des freien Federendes 38 ist auf der Stirnseite 20 der Montageplatte 18 eine Demontagenut 40 zur Demontage des Gassackmoduls 16 vorgesehen. Diese Demontagenut 40 erstreckt sich im Wesentlichen in radialer Richtung und ist auch in einem am Fahrzeuglenkrad montierten Zustand des Gassackmoduls 16 durch ein Werkzeug von außerhalb des Lenkrads zugänglich. Das Werkzeug lässt sich dann radial in die Demontagenut 40 einführen und kann das Federelement 14 zurück in seine Entkopplungsposition gemäß Figur 3 bewegen, sodass sich das Gassackmodul 16 in axialer Richtung wieder problemlos von der Montageplatte 18 entfernen lässt.

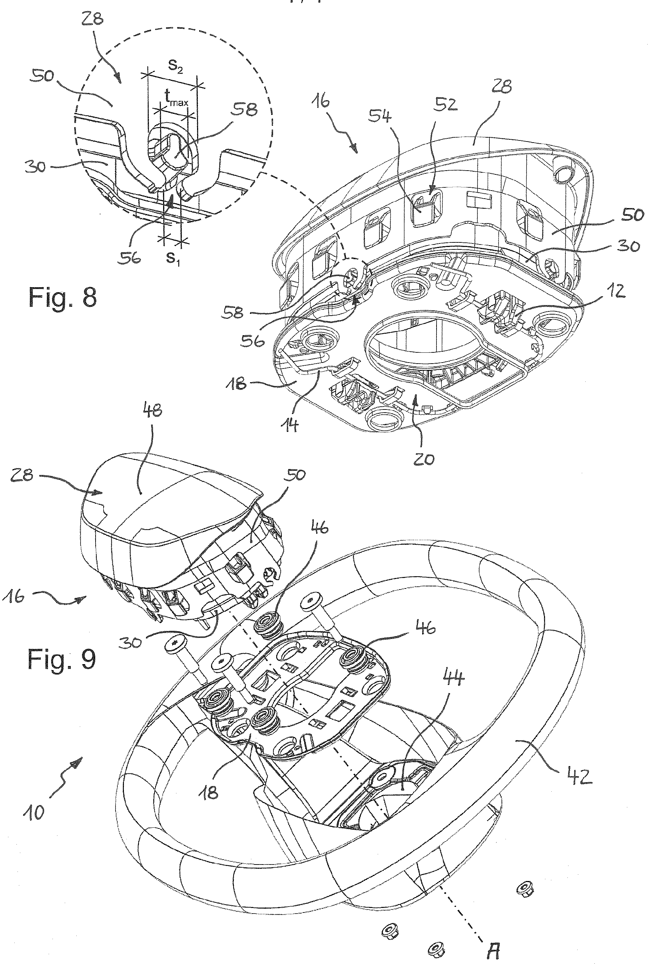

Die Lenkungsbaugruppe 10 umfasst gemäß Figur 9 auch ein Lenkrad 42 mit einem Lenkradskelett 44, wobei die Montageplatte 18 als separates Bauteil axial zwischen dem Gassackmodul 16 und dem Lenkradskelett 44 angeordnet ist.

Im dargestellten Ausführungsbeispiel der Lenkungsbaugruppe 10 ist die Montageplatte 18 über Schwingungsdämpfer 46 am Lenkradskelett 44 befestigt, sodass die Montageplatte 18 und das Lenkradskelett 44 schwingfähig verbunden sind.

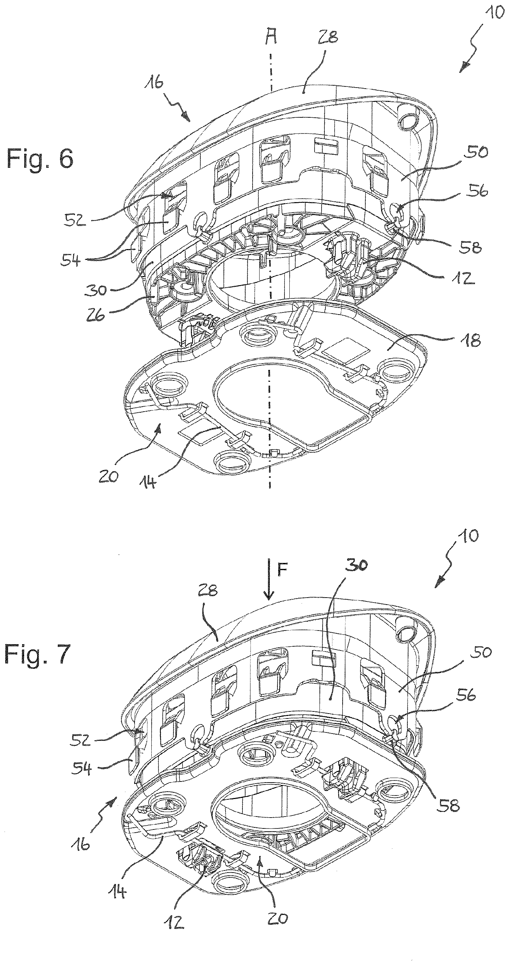

Die Figuren 6 bis 8 zeigen perspektivische Ansichten der Lenkungsbaugruppe 10, anhand derer im Folgenden Besonderheiten des Gassackmoduls 16 für ein Insassenrückhaltesystem erläutert werden.

Das Gassackmodul 16 umfasst gemäß den Figuren 6 bis 8 die Modulkappe 28, die im eingebauten Zustand des Gassackmoduls 16 einem Insassen zugewandt ist, und den Modulboden 30, der ein als Rasthaken 12 ausgeführtes Rastmittel zur Befestigung des Gassackmoduls 16 an einem Fahrzeugbauteil, insbesondere an einer Montageplatte 18 oder einem Fahrzeuglenkrad aufweist.

Die Modulkappe 28 und der Modulboden 30 sind entlang einer Montageachse A aufeinander zu bewegbar, bis sie zunächst eine axiale Vormontageposition (Figuren 6 und 7) und dann eine axiale Endmontageposition (Figur 8) erreichen, wobei die Modulkappe 28 und der Modulboden 30 zusammenwirkende Vorfixierelemente aufweisen, welche die Modulkappe 28 und den Modulboden 30 in der Vormontageposition unverlierbar aneinander befestigen.

Die Modulkappe 28 ist im vorliegenden Ausführungsbeispiel topfförmig ausgebildet und weist eine axiale Stirnwand 48 sowie eine Umfangswand 50 auf. Als Vorfixierelemente sind in der Umfangswand 50 der Modulkappe 28 mehrere Vormontagefenster 52 und am Modulboden 30 mehrere Vormontagehaken 54 vorgesehen, welche jeweils in ein zugeordnetes Vormontagefenster 52 eingreifen und somit die Modulkappe 28 und den Modulboden 30 in der Vormontageposition des Gassackmoduls 16 unverlierbar verbinden. Auf diese Weise bildet das Gassackmodul 16 in seiner Vormontageposition eine Baueinheit, die problemlos transportiert und weiterverarbeitet werden kann. Die Vorfixierelemente sorgen jedoch nicht für eine starre, spielfreie Verbindung, sondern erlauben sowohl in axialer Richtung als auch in radialer Richtung eine gewisse Relativbewegung zwischen der Modulkappe 28 und dem Modulboden 30.

Abgesehen von den Vorfixierelementen weisen die Modulkappe 28 und der Modulboden 30 ferner zusammenwirkende Widerstandskonturen auf, welche bei einer axialen Relativbewegung der Modulkappe 28 und des Modulbodens 30 von der Vormontageposition in die Endmontageposition einen vorbestimmten Montagewiderstand aufweisen.

Die Widerstandskonturen sind in der dargestellten Ausführungsform insbesondere Rastkonturen, welche die Modulkappe 28 und den Modulboden 30 in der Endmontageposition verrasten.

Konkret sind die Widerstandskonturen als axial verlaufender Schlitz 56 in der Umfangswand 50 der Modulkappe 28 an einem von der Stirnwand 48 abgewandten axialen Ende und als radialer Zapfen 58 am Modulboden 30 ausgebildet.

Der Schlitz 56 weist in axialer Richtung gesehen zumindest abschnittsweise eine tangentiale Schlitzbreite s auf, die kleiner ist als eine maximale tangentiale Abmessung tₘₐₓ des radialen Zapfens 58. Dadurch entsteht der Montagewiderstand bei einer Bewegung von der Vormontageposition in die Endmontageposition.

Insbesondere weist der Schlitz 56 an einem von der axialen Stirnwand 48 abgewandten Ende der Umfangswand 50 eine erste Schlitzbreite S₁ auf, die geringer ist als die maximale tangentiale Abmessung tₘₐₓ des radialen Zapfens 58, wobei die Schlitzbreite s dann in Richtung zur axialen Stirnwand 48 hin zunimmt, bis sie eine zweite Schlitzbreite S₂ erreicht, die größer als die maximale tangentiale Abmessung tₘₐₓ des radialen Zapfens 58 ist.

Anhand des Detailausschnitts zu Figur 10 wird deutlich, dass der radiale Zapfen 58 in der dargestellten Endmontageposition des Gassackmoduls 16 quer zur Radialrichtung von den Rändern des Schlitzes 56 beabstandet ist.

Folglich wird in der Endmontageposition des Gassackmoduls 16 eine Relativbewegung zwischen der Modulkappe 28 und dem Modulboden 30 durch die Widerstandkonturen nicht behindert, sodass die Modulkappe 28 und der Modulboden 30 auch in der Endmontageposition relativ zueinander ein axiales und radiales Spiel aufweisen.

Der radiale Zapfen 58 und/oder die Umfangswand 50 der Modulkappe 28 ist zumindest im Bereich des Schlitzes 56 aus einem nachgiebigen, insbesondere einem elastisch nachgiebigen Material hergestellt, vorzugsweise aus einem geeigneten Kunststoff.

Über Parameter wie das Material des Zapfens 58 und/oder der Umfangswand 50, eine Wandstärke der Umfangswand 50 im Bereich des Schlitzes 56 sowie das Verhältnis zwischen minimaler Schlitzbreite und maximaler tangentialer Abmessung des Zapfens 58 lässt sich ein gewünschter Montagewiderstand einfach und präzise einstellen.

Das beschriebene Gassackmodul 16 für ein Insassenrückhaltesystem bildet zusammen mit dem Lenkrad 42, welches ein Lenkradskelett 44 aufweist, und der lenkradseitig angeordneten Montageplatte 18 zur Befestigung des Gassackmoduls 16 am Lenkradskelett 44 eine Lenkungsbaugruppe 10 für eine Fahrzeuglenkung. Dabei ist das Rastmittel (Rasthaken 12) am Modulboden 30 des Gassackmoduls 16 ein erstes Rastmittel, welches bei einer axialen Bewegung des Gassackmoduls 16 relativ zur Montageplatte 18 mit einem an der Montageplatte 18 vorgesehenen zweiten Rastmittel (Federelement 14) verrastet, wobei ein Montagewiderstand zum Verrasten der ersten und zweiten Rastmittel geringer ist als ein Montagewiderstand der Widerstandskonturen beim Überführen des Gassackmoduls 16 von der Vormontagestellung in die Endmontagestellung. Dies ist im Montagestadium gemäß Figur 7 veranschaulicht, wo sich das Gassackmodul 16 noch in seiner Vormontagestellung befindet, die Verrastung des Gassackmoduls 16 mit der Montageplatte 18 jedoch bereits erfolgt ist. Dies lässt sich besonders dann gut realisieren, wenn sich das Gassackmodul 16 mit geringem Montagewiderstand an der Montageplatte 18 verrasten lässt, also beispielsweise durch eine Verrastung wie sie oben insbesondere anhand der Figuren 3 bis 5 beschrieben wurde.

Gemäß Figur 9 ist die Montageplatte 18 als separates Bauteil axial zwischen dem Gassackmodul 16 und dem Lenkradskelett 44 des Lenkrads 42 angeordnet und über Schwingungsdämpfer 46 schwingfähig am Lenkradskelett 44 befestigt.

Aufgrund des Spiels zwischen der Modulkappe 28 und dem Modulboden 30 in der Endmontageposition des Gassackmoduls 16 kann die Modulkappe folglich mit minimalem Spaltmaß äußerst passgenau und im Wesentlichen unbeweglich im Lenkrad 42 aufgenommen sein, während das übrige Gassackmodul 16 mitsamt der Montageplatte 18 relativ zum Lenkrad 42 begrenzt beweglich ist und somit in vorteilhafter Weise als Schwingungstilger fungieren und unerwünschte Vibrationen in der Fahrzeuglenkung dämpfen kann.

Optional kann die Modulkappe 28 ferner ein (nicht dargestelltes) Befestigungsmittel aufweisen, welches die Modulkappe 28 in der Endmontagestellung des Gassackmoduls 16 direkt mit dem Lenkrad 42 verbindet.

Im Folgenden wird schließlich noch auf die Montage des Gassackmoduls 16 am Lenkrad 42 zur Bildung der Lenkungsbaugruppe 10 eingegangen.

Hierbei wird zunächst das Gassackmodul 16 in seiner Vormontageposition gemäß Figur 6 bereitgestellt.

Ferner wird das Lenkrad 42 mit dem Lenkradskelett 44 und der am Lenkradskelett 44 befestigten Montageplatte 18 bereitgestellt. Wie in Figur 9 veranschaulicht kann die Montageplatte 18 dabei insbesondere über Schwingungsdämpfer 46 am Lenkradskelett 44 befestigt werden, sodass die Montageplatte 18 und das Lenkradskelett 44 schwingfähig verbunden sind.

Anschließend wird das Gassackmodul 16 entlang der Montageachse A in Richtung zum Lenkradskelett 44 zugeführt und gemäß Figur 7 eine axiale Montagekraft F auf die Modulkappe 28 des Gassackmoduls 16 aufgebracht, wobei zuerst die Rastmittel des Gassackmoduls 16 und der Montageplatte 18, also der Rasthaken 12 und das Federelement 14 eine Rastverbindung ausbilden und erst danach das Gassackmodul 16 von seiner Vormontageposition in seine Endmontageposition gemäß Figur 8 überführt wird.

Optional kann die Modulkappe 28 beim Überführen des Gassackmoduls 16 von der Vormontageposition in die Endmontageposition im Wesentlichen gleichzeitig direkt am Lenkrad 42 fixiert, insbesondere mit dem Lenkrad 42 verrastet werden.

## Patentansprüche

1. Lenkungsbaugruppe für eine Fahrzeuglenkung, mit
einem ersten Kopplungsbauteil, insbesondere einem Gassackmodul (16), das wenigstens einen Rasthaken (12) aufweist, und
einem zweiten Kopplungsbauteil, insbesondere einer Montageplatte (18), das ein vormontiertes Federelement (14) aufweist,
wobei die Kopplungsbauteile entlang einer Montageachse (A) aufeinander zu bewegbar sind, bis ein Abschnitt des Federelements (14) den wenigstens einen Rasthaken (12) in einer Befestigungsposition hintergreift und die Kopplungsbauteile miteinander verbindet,
wobei das Federelement (14) bewegbar ist zwischen einer Kopplungsstellung, in der das Federelement (14) weitgehend entspannt ist sowie den wenigstens einen Rasthaken (12) hintergreift, und einer Entkopplungsstellung, in der das Federelement (14) gespannt ist sowie quer zur Montageachse (A) vom Rasthaken (12) beabstandet ist,
wobei das zweite Kopplungsbauteil ein Halteelement (22) zum Fixieren des Federelements (14) in der Entkopplungsstellung aufweist.

2. Lenkungsbaugruppe nach Anspruch 1, **dadurch gekennzeichnet, dass** das Halteelement (22) ein an am zweiten Kopplungsbauteil angebrachter, insbesondere einstückig angeformter, axialer Vorsprung ist.

3. Lenkungsbaugruppe nach Anspruch 2, **dadurch gekennzeichnet, dass** das Halteelement (22) als Rampe ausgeführt ist, wobei eine Rampenschräge (24) in der Kopplungsstellung des Federelements (14) dem Federelement (14) zugewandt und in der Entkopplungsstellung des Federelements (14) vom Federelement (14) abgewandt ist.

4. Lenkungsbaugruppe nach einem der vorhergehenden Ansprüche, **dadurch gekennzeichnet, dass** das erste Kopplungsbauteil ein Betätigungselement (26) zum Lösen des Federelements (14) aus seiner Entkopplungsstellung aufweist.

5. Lenkungsbaugruppe nach Anspruch 4, **dadurch gekennzeichnet, dass** das Betätigungselement (26) ein axialer Vorsprung ist, welcher in der Entkopplungsstellung des Federelements (14) axial mit einem Abschnitt des Federelements (14) fluchtet.

6. Lenkungsbaugruppe nach Anspruch 4 oder 5, **dadurch gekennzeichnet, dass** das zweite Kopplungsbauteil eine axiale Durchgangsöffnung (32) aufweist, durch die sich das Betätigungselement (26) erstrecken kann.

7. Lenkungsbaugruppe nach einem der vorhergehenden Ansprüche, **dadurch gekennzeichnet, dass** das erste Kopplungsbauteil ein Gassackmodul (16) und das zweite Kopplungsbauteil eine Montageplatte (18) ist.

8. Lenkungsbaugruppe nach Anspruch 7, **dadurch gekennzeichnet, dass** das Federelement (14) auf einer vom Gassackmodul (16) abgewandten axialen Stirnseite (20) der Montageplatte (18) angeordnet ist.

9. Lenkungsbaugruppe nach Anspruch 7 oder 8, **dadurch gekennzeichnet, dass** das Betätigungselement (26) an einem der Montageplatte (18) zugewandten Modulboden (30) des Gassackmoduls (16) vorgesehen ist.

10. Lenkungsbaugruppe nach einem der Ansprüche 7 bis 9, **dadurch gekennzeichnet, dass** ein Lenkradskelett (44) vorgesehen ist, wobei die Montageplatte (18) als separates Bauteil axial zwischen dem Gassackmodul (16) und dem Lenkradskelett (44) angeordnet ist.

11. Lenkungsbaugruppe nach Anspruch 10, **dadurch gekennzeichnet, dass** die Montageplatte (18) schwingfähig am Lenkradskelett (44) befestigt ist.
